(19) Europäisches Patentamt / European Patent Office / Office européen des brevets

(11) **EP 4 369 806 A1**

(12) **EUROPEAN PATENT APPLICATION**

(43) Date of publication:
**15.05.2024  Bulletin 2024/20**

(21) Application number: **23201632.9**

(22) Date of filing: **04.10.2023**

(51) International Patent Classification (IPC):
**H04W 56/00** $^{(2009.01)}$

(52) Cooperative Patent Classification (CPC):
**H04W 56/0015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022  US 202263383112 P**
**26.09.2023  US 202318373257**

(71) Applicant: **MediaTek Inc.**
**Hsin-Chu 300 (TW)**

(72) Inventor: **PENG, Yang-Hung**
**30078 Hsinchu City (TW)**

(74) Representative: **Hoefer & Partner Patentanwälte mbB**
**Pilgersheimer Straße 20**
**81543 München (DE)**

(54) **CONTROL METHOD OF WIRELESS COMMUNICATION MODULE HAVING REFERENCE POINT BASED PPDU END TIME ALIGNMENT**

(57)   The present invention provides a control method of a wireless communication module having a first link and a second link. The control method includes the steps of: obtaining a first timestamp of a first reference point (202) corresponding to a first PPDU, wherein the first PPDU is transmitted on a channel corresponding to the first link; obtaining a second timestamp of a second reference point (206) corresponding to the second link, wherein the second reference point is a slot boundary, a transmission end or a reception end; determining a length of a second PPDU (210) according to the first timestamp and the second timestamp, to make an end of the second PPDU is aligned to an end of the first PPDU; and generating the second PPDU according to the determined length of the second PPDU, and transmitting the second PPDU after the second reference point (212).

FIG. 2

**Description**

Cross Reference to Related Applications

This application claims the benefit of U.S. Provisional Application No. 63/383, 112, filed on November 10th, 2022. The content of the application is incorporated herein by reference.

Background

IEEE 802.11be defines multiple link operations that allow an access point (AP) and a station to communicate with each other by using two or more links. Due to a hardware limitation such as spacing between antennas within the station, the AP/station can be operated in a synchronous mode or an asynchronous mode. The synchronous mode is also named as a non- simultaneous transmit and receive (NSTR) mode, that is the AP/station cannot transmit and receive data at the same time via multiple links. The asynchronous mode is also named as a simultaneous transmit and receive (STR) mode, that is the AP/station can transmit and receive data at the same time via multiple links, but the AP/station does not need to transmit data by using the multiple links simultaneously.

Regarding the NSTR mode, IEEE 802.11be also defines physical layer protocol data unit (PPDU) end time alignment requirements, that is when two PPDUs are simultaneously transmitted via two links, respectively, their end times should be aligned, and a difference between the end times of the simultaneously transmitted PPDUs is required to be less than or equal to a specific time, to avoid the interference between two links. In practice, because the start time of multiple packets transmitted by different links are usually not the same, the PPDU transmitted later need to calculate the remaining length (i.e., remaining transmission time) of the PPDU transmitted first in real time to generate PPDU with an appropriate length, to satisfy the end time alignment requirements. However, because a preparation time of the PPDU transmitted later may be affected by some parameters of the chip, such as a clock frequency or a semiconductor process variation, the calculated length of the PPDU transmitted later may be variable or incorrect, causing the two PPDUs not being accurately aligned.

Summary

It is therefore an objective of the present invention to provide a wireless communication method, which uses a reference point based PPDU end time alignment mechanism, to solve the above-mentioned problems. A control method of a wireless communication module and a wireless communication module according to the invention are defined in the independent claims. The dependent claims define preferred embodiments thereof.

According to one embodiment of the present invention, a control method of a wireless communication module having a first link and a second link comprises: obtaining a first timestamp of a first reference point corresponding to a first PPDU, wherein the first PPDU is transmitted on a channel corresponding to the first link; obtaining a second timestamp of a second reference point corresponding to the second link, wherein the second reference point is a slot boundary, a transmission end or a reception end; determining a length of a second PPDU according to the first timestamp and the second timestamp, to make an end of the second PPDU is aligned to an end of the first PPDU; and generating the second PPDU according to the determined length of the second PPDU, and transmitting the second PPDU after the second reference point.

According to one embodiment of the present invention, a wireless communication module of an electronic device is configured to perform the steps of: obtaining a first timestamp of a first reference point corresponding to a first PPDU, wherein the first PPDU is transmitted on a channel corresponding to the first link; obtaining a second timestamp of a second reference point corresponding to the second link, wherein the second reference point is a slot boundary, a transmission end or a reception end; determining a length of a second PPDU according to the first timestamp and the second timestamp, to make an end of the second PPDU is aligned to an end of the first PPDU; and generating the second PPDU according to the determined length of the second PPDU, and transmitting the second PPDU after the second reference point.

These and other objectives of the present invention will no doubt become obvious to those of ordinary skill in the art after reading the following detailed description of the preferred embodiment that is illustrated in the various figures and drawings.

Brief Description of the Drawings

FIG. 1 is a diagram illustrating a wireless communication system according to one embodiment of the present invention.

FIG. 2 is a control method of one of the wireless communication module according to one embodiment of the present invention.

FIG. 3 is a diagram of calculating a length of a PPDU to be aligned according to one embodiment of the present invention.

FIG. 4 is a diagram of calculating a length of a PPDU to be aligned according to one embodiment of the present invention.

FIG. 5 is a control method of one of the wireless communication module according to one embodiment of the present invention.

FIG. 6 is a diagram of calculating a length of a PPDU to be aligned according to one embodiment of the present invention.

FIG. 7 is a control method of one of the wireless communication module according to one embodiment of the present invention.

FIG. 8 is a diagram of calculating a length of a PPDU to be aligned according to one embodiment of the present invention.

FIG. 9 is a diagram illustrating a MAC layer circuitry within the wireless communication module according to a first embodiment of the present invention.

FIG. 10 is a diagram illustrating a MAC layer circuitry within the wireless communication module according to a second embodiment of the present invention.

Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

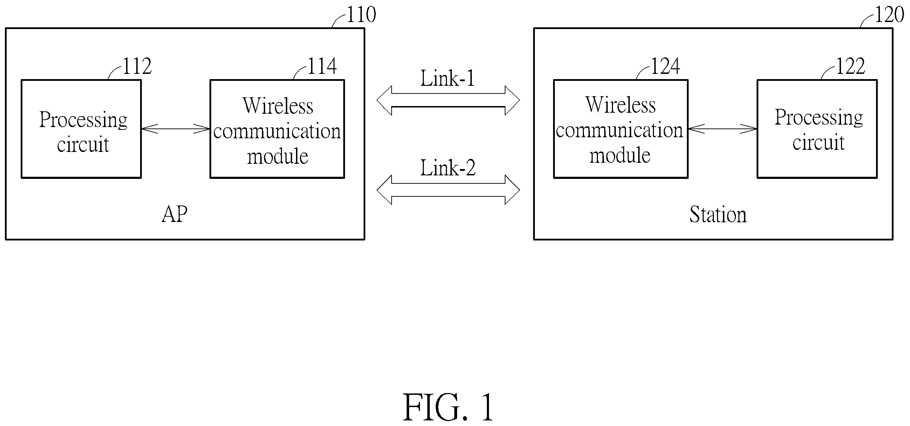

FIG. 1 is a diagram illustrating a wireless communication system according to one embodiment of the present invention. As shown in FIG. 1, the wireless communication system comprises an access point (AP) 110 and at least one station such as 120. The AP 110 is a Wi-Fi access point that allows other wireless devices such as the station 120 to connect to a wired network, and the AP 110 mainly comprises a processing circuit 112 and a wireless communication module 114. The station 120 is a Wi-Fi station comprising a processing circuit 122 and a wireless communication module 124, and the station 120 can be a cell phone, a tablet, a notebook, or any other electronic device capable of wirelessly communicating with the AP 110. In addition, the wireless communication module 114/124 comprises at least a media address control (MAC) layer circuitry and physical layer circuitry.

In this embodiment, the AP 110 and the station 120 are multi-link devices (MLD), that is the AP 110 and the station 120 are communicated with each other by using two or more links such as Link-1 and Link-2 shown in FIG. 1. In this embodiment, the Link-1 may use a channel corresponding to a 2.4GHz band (e.g., 2.412GHz - 2.484GHz), a 5GHz band (e.g., 4.915GHz - 5.825GHz) or a 6GHz band (e.g., 5.925GHz - 7.125GHz) ; and the Link-2 may also use a channel corresponding to the 2.4GHz band, the 5GHz band or the 6GHz band.

In this embodiment, the AP 110 and the station 120 operate in the NSTR mode, that is the AP 110 and the station 120 cannot transmit and receive data at the same time via multiple links. As described in the background of the present invention, IEEE 802.11be defines PPDU end time alignment requirements, that is when two PPDUs are simultaneously transmitted via two links, respectively, their end times should be aligned. Therefore, the following embodiments provide control methods that can generate the PPDU with suitable length transmitted later to align the PPDU transmitted first.

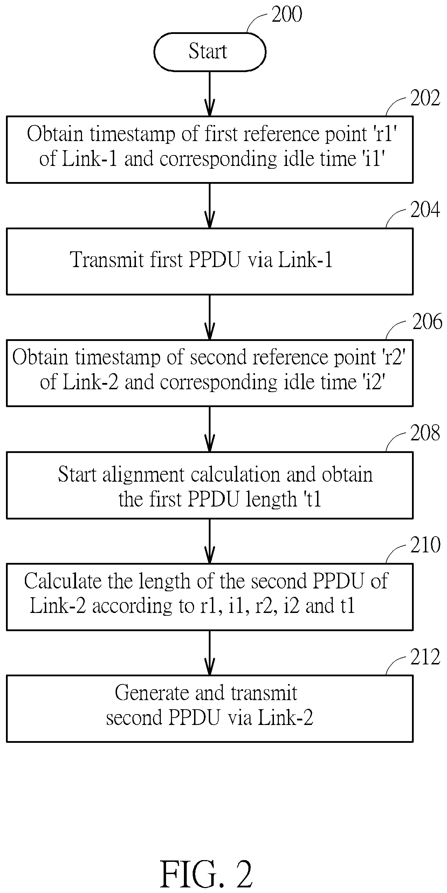

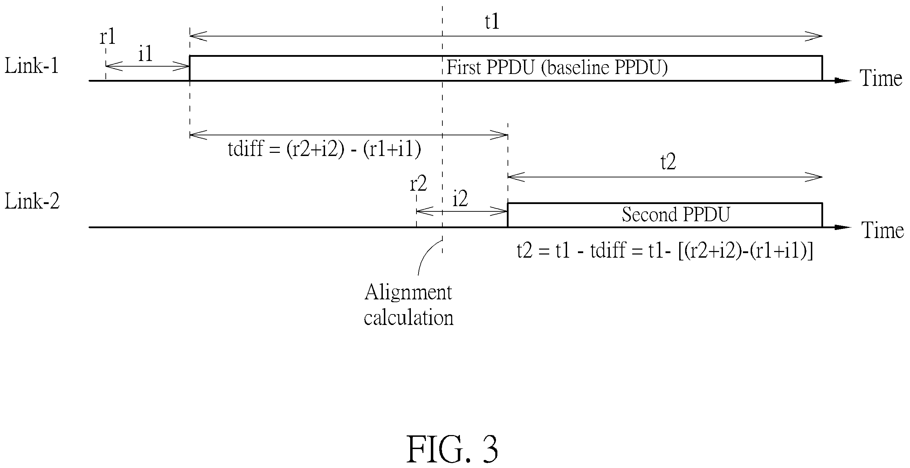

FIG. 2 is a control method of one of the wireless communication module 114 or 124 according to one embodiment of the present invention. In the following description, the wireless communication module 114 serves as an example to perform the following steps, but the present invention is not limited thereto. In Step 200, the flow starts, and the AP 110 and the station 120 has established at least two links such as Link-1 and Link-2 shown in FIG. 1. In Step 202, referring to FIG. 3 together, an internal circuit of the wireless commutation module 114 obtains a timestamp 'r1' of a first reference point of Link-1, wherein the first reference point is a slot boundary, a reception end or a transmission end of a previous received/transmitted PPDU of Link-1, and timestamp of the first reference point is an absolute time provided by a system of the AP 110. In addition, the internal circuit further obtains a first idle time 'i1' after the first reference point of Link-1. In one embodiment, if the first reference point is the reception end or the transmission end of a previous received/transmitted PPDU, the first idle time 'i1' is a short inter-frame space (SIFS) ; and if the first reference point is the slot boundary, the first idle time 'i1' is one slot time. That is, the first idle time 'i1' is a fixed value in this embodiment. In addition, the timestamp 'r1' is temporarily stored in an internal buffer.

In Step 204, the wireless communication module 114 transmits a first PPDU to the station 120 via the Link-1 immediately after the idle time 'i1'. In this embodiment, the first PPDU serves as a baseline PPDU, that is the other PPDU is generated and transmitted to align the end of the first PPDU.

In Step 206, the internal circuit of the wireless commutation module 114 obtains a timestamp 'r2' of a second reference point of Link-2, wherein the second reference point is a slot boundary, a reception end or a transmission end of a previous received/transmitted PPDU of Link-2, and timestamp of the second reference point is an absolute time provided by a system of the AP 110. In addition, the internal circuit further obtains a second idle time 'i2' after the second reference point of Link-2. In one embodiment, if the second reference point is the reception end or the transmission end of a previous received/transmitted PPDU, the second idle time 'i2' is the SIFS; and if the second reference point is the slot boundary, the second idle time 'i2' is one slot time. That is, the second idle time 'i2' is a fixed value in this embodiment. In addition, the timestamp 'r2' is temporarily stored in an internal buffer.

In Step 208, after the second reference point of Link-2, the wireless communication module 114 prepares to generate a second PPDU to be transmitted via the Link-2; and before the generation of the second PPDU, the wireless communication module 114 starts to perform an alignment calculation to determine a length of the second PPDU. At this time, the internal circuit obtains a length (i.e., transmission time) of the first PPDU, that is 't1' shown in FIG. 3, but this invention is not limited thereto.

In Step 210, the wireless communication module 114 calculates the length of the second PPDU according to the length of the first PPDU 't1', the timestamp of the first reference point 'r1', the first idle time 'i1', the timestamp of the second reference point 'r2' and the second idle time 'i2'. Specifically, referring to FIG. 3, because the time difference 'tdiff' between the head of the first PPDU and the head of the second PPDU is "(r2+i2)-(r1+i1)", the length (i.e., transmission time) of the second PPDU 't2' can be calculated as follows:

$$t2 = t1 - tdiff = t1 - [(r2+i2)-(r1+i1)] \quad\text{............................................} (1).$$

In Step 212, after the length of the second PPDU 't2' is determined, the wireless communication module 114 aggregates a plurality of media access control protocol data units (MPDUs) and adds zero or some paddings to generate the second PPDU. Then, the wireless communication module 114 transmits the second PPDU to the station 120 via the Link-2 immediately after the idle time 'i2'.

In the above embodiment shown in FIG. 2 and FIG. 3, the calculation of the length of the second PPDU only involves timestamps (i.e., 'r1' and 'r2'), known time (i.e., 't1') or fixed time (i.e., 'i1' and 'i2'), and does not involve parameters that will be affected by the semiconductor process, so the calculated length of the second PPDU is very accurate, and the ends of the first PPDU and the second PPDU can be precisely aligned.

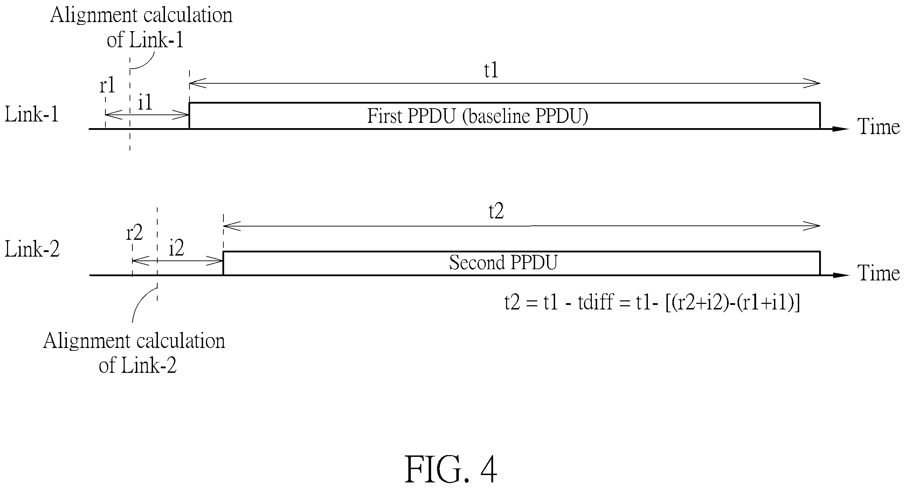

In the embodiment shown in FIG 3, the wireless communication module 114 starts to perform the alignment calculation for the second PPDU of the Link-2 after the transmission of the first PPDU, however, this feature is not a limitation of the present invention. In another embodiment shown in FIG. 4, the wireless communication module 114 can start to perform the alignment calculation for the second PPDU of the Link-2 before the transmission of the first PPDU, wherein the parameters such as r1, r2, i1, i2 and t1 can be obtained in the internal circuit (e.g., Steps 202, 206 and 208), and the length of the second PPDU can be calculated by using the above formula (1). This alternative shall fall within the scope of the present invention.

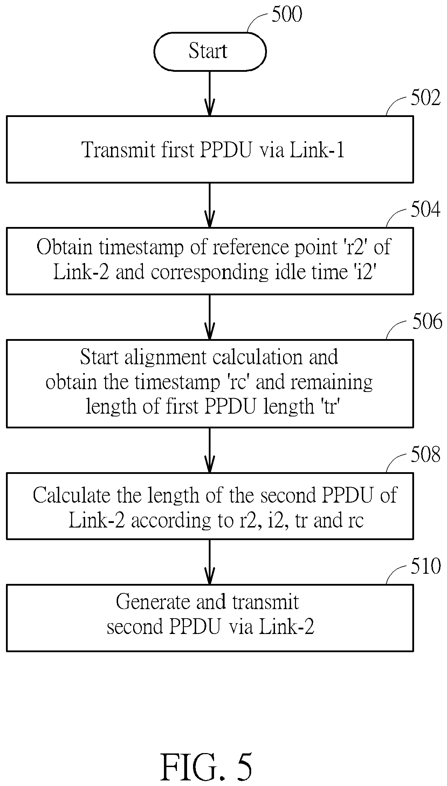

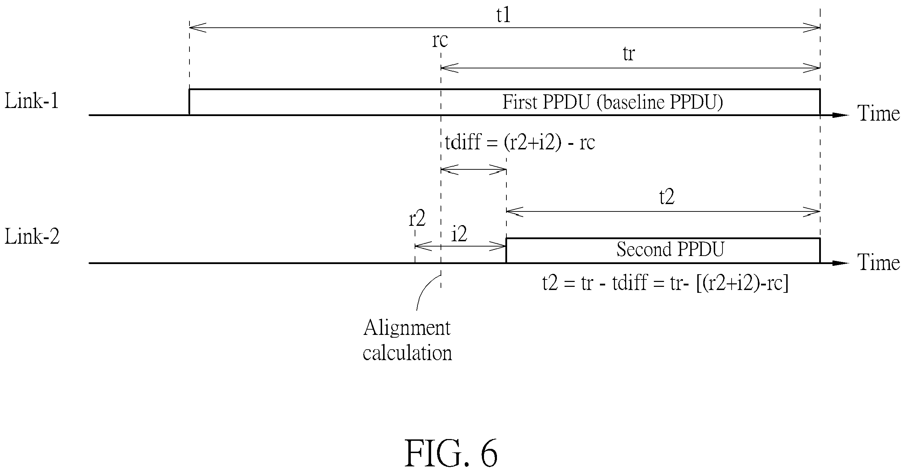

FIG. 5 is a control method of one of the wireless communication module 114 or 124 according to one embodiment of the present invention. In the following description, the wireless communication module 114 serves as an example to perform the following steps, but the present invention is not limited thereto. In Step 500, the flow starts, and the AP 110 and the station 120 has established at least two links such as Link-1 and Link-2 shown in FIG. 1. In Step 502, referring to FIG. 6 together, the wireless communication module 114 transmits a first PPDU via the Link-1. In this embodiment, the first PPDU serves as a baseline PPDU, that is the other PPDU is generated and transmitted to align the end of the first PPDU.

In Step 504, the internal circuit of the wireless commutation module 114 obtains a timestamp 'r2' of a reference point of Link-2, wherein the reference point is a slot boundary, a reception end or a transmission end of a previous received/transmitted PPDU of Link-2, and the timestamp 'r2' of the reference point is an absolute time provided by a system of the AP 110. In addition, the internal circuit further obtains an idle time 'i2' after the reference point of Link-2. In one embodiment, if the reference point is the reception end or the transmission end of a previous received/transmitted PPDU, the idle time 'i2' is the SIFS; and if the reference point is the slot boundary, the idle time 'i2' is one slot time. That is, the idle time 'i2' is a fixed value in this embodiment. In addition, the timestamp 'r2' is temporarily stored in an internal buffer.

In Step 506, after the reference point of Link-2, the wireless communication module 114 prepares to generate a second PPDU to be transmitted via the Link-2; and before the generation of the second PPDU, the wireless communication module 114 starts to perform an alignment calculation to determine a length of the second PPDU. At this time, the start of the alignment calculation serves as a reference point, and the internal circuit gets a current timestamp 're' (i.e., the timestamp shows the time to start the alignment calculation) provided by the system of the AP 110; and the internal circuit further obtains a remaining length (i.e., transmission time) of the first PPDU, that is 'tr' shown in FIG. 6. It is noted that the information of the first PPDU, such as the length and the start transmission time, is known and stored in the buffer of the wireless communication module 114, so the remaining length of the first PPDU can be obtained by using the this information and the timestamp of the alignment calculation 'rc'.

In Step 508, the wireless communication module 114 calculates the length of the second PPDU according to the remaining length of the first PPDU 'tr', the timestamp of the reference point 'r2', the second idle time 'i2' and the timestamp of the alignment calculation 're'. Specifically, referring to FIG. 6, because the time difference 'tdiff' between the head of the first PPDU and the head of the second PPDU is "(r2+i2)-rc", the length (i.e., transmission time) of the second PPDU 't2' can be calculated as follows:

$$t2 = tr - tdiff = tr- [(r2+i2)-rc] \quad\text{............................................}(2).$$

In Step 510, after the length of the second PPDU 't2' is determined, the wireless communication module 114 aggregates a plurality of MPDUs and adds zero or some paddings to generate the second PPDU. Then, the wireless communication module 114 transmits the second PPDU to the station 120 via the Link-2 immediately after the idle time 'i2'.

In the above embodiment shown in FIG. 5 and FIG. 6, the calculation of the length of the second PPDU only involves timestamps (i.e., 'r2' and 'rc'), known time (i.e., 'tr') or fixed time (i.e., '12'), and does not involve parameters that will be affected by the semiconductor process, so the calculated length of the second PPDU is very accurate, and the ends of the first PPDU and the second PPDU can be precisely aligned.

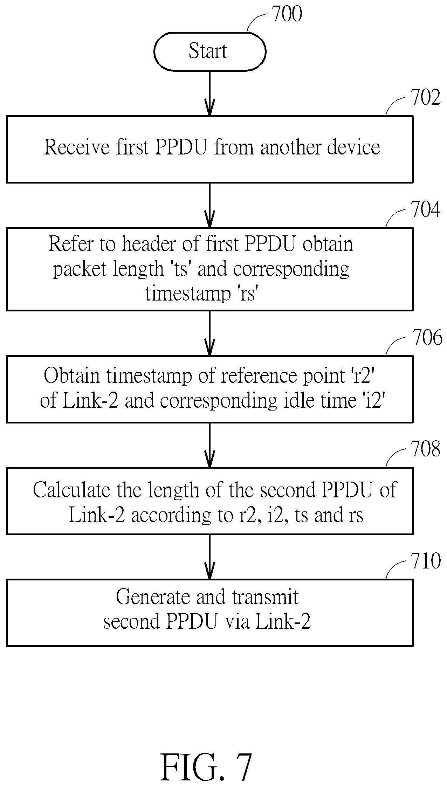

In the above embodiments shown in FIG. 2 - FIG. 6, the second PPDU is generated to align the end of the first PPDU, wherein both the second PPDU and the first PPDU are transmitted by the wireless communication module 114. However, in another embodiment, the second PPDU can be generated by to align the end of another PPDU generated by another device, wherein the other PPDU is transmitted by using the channel of the Link-1. FIG. 7 is a control method of one of the wireless communication module 114 or 124 according to one embodiment of the present invention. In the following description, the wireless communication module 114 serves as an example to perform the following steps, but the present invention is not limited thereto. In Step 700, the flow starts, and the AP 110 and the station 120 has established at least two links such as Link-1 and Link-2 shown in FIG. 1. In Step 702, the wireless communication module 114 receives a first PPDU generated by another device, wherein the first PPDU is transmitted by using the channel of the Link-1. In Step 704, the wireless communication module 114 parses the header of the first PPDU to obtain the information of the first PPDU such as the packet (payload) length 'ts'. In addition, because the length of the header is set according to the specification, the wireless communication can get a timestamp 'rs' when the transmission of the packet (payload) begins, that is the start of the transmission of the packet (payload) serves as a reference point for getting the timestamp 'rs'.

In Step 706, the internal circuit of the wireless commutation module 114 obtains a timestamp 'r2' of a reference point of Link-2, wherein the reference point is a slot boundary, a reception end or a transmission end of a previous received/transmitted PPDU of Link-2, and timestamp of the reference point is an absolute time provided by a system of the AP 110. In addition, the internal circuit further obtains an idle time 'i2' after the reference point of Link-2. In one embodiment, if the reference point is the reception end or the transmission end of a previous received/transmitted PPDU, the idle time 'i2' is the SIFS; and if the reference point is the slot boundary, the idle time 'i2' is one slot time. That is, the idle time 'i2' is a fixed value in this embodiment. In addition, the timestamp 'r2' is temporarily stored in an internal buffer. Then, after the reference point of Link-2, the wireless communication module 114 prepares to generate a second PPDU to be transmitted via the Link-2; and before the generation of the second PPDU, the wireless communication module 114 starts to perform an alignment calculation to determine a length of the second PPDU.

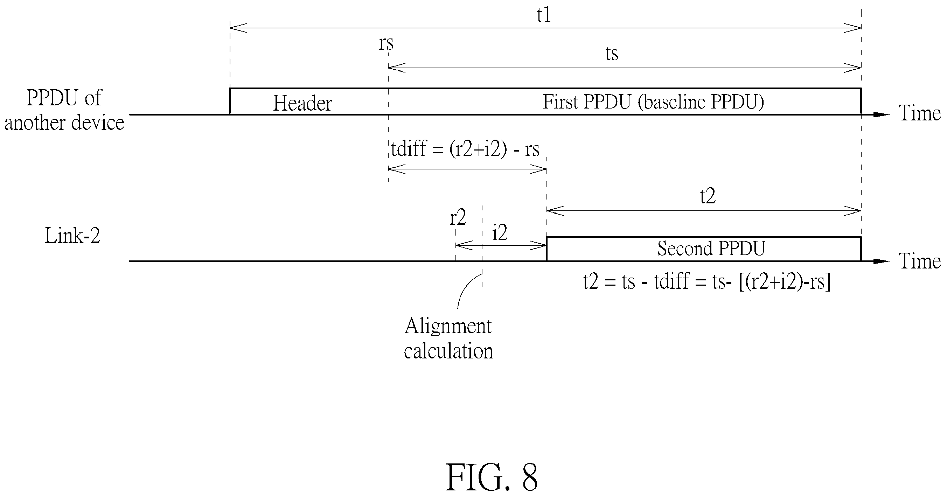

In Step 708, the wireless communication module 114 calculates the length of the second PPDU according to the packet length of the first PPDU 'ts', the timestamp of the reference point 'r2', the second idle time 'i2' and the timestamp of the packet 'rs'. Specifically, referring to FIG. 8, because the time difference 'tdiff' between the head of the first PPDU and the head of the second PPDU is "(r2+i2)-rs", the length (i.e., transmission time) of the second PPDU 't2' can be calculated as follows:

$$t2 = ts - tdiff = ts- [(r2+i2)-rs] \quad\text{............................................}(3).$$

In Step 710, after the length of the second PPDU 't2' is determined, the wireless communication module 114 aggregates a plurality of MPDUs and adds zero or some paddings to generate the second PPDU. Then, the wireless communication module 114 transmits the second PPDU to the station 120 via the Link-2 immediately after the idle time 'i2'.

In the above embodiment shown in FIG. 7 and FIG. 8, the calculation of the length of the second PPDU only involves timestamps (i.e., 'r2' and 'rs'), known time (i.e., 'ts') or fixed time (i.e., '12'), and does not involve parameters that will be affected by the semiconductor process, so the calculated length of the second PPDU is very accurate, and the ends of the first PPDU and the second PPDU can be precisely aligned.

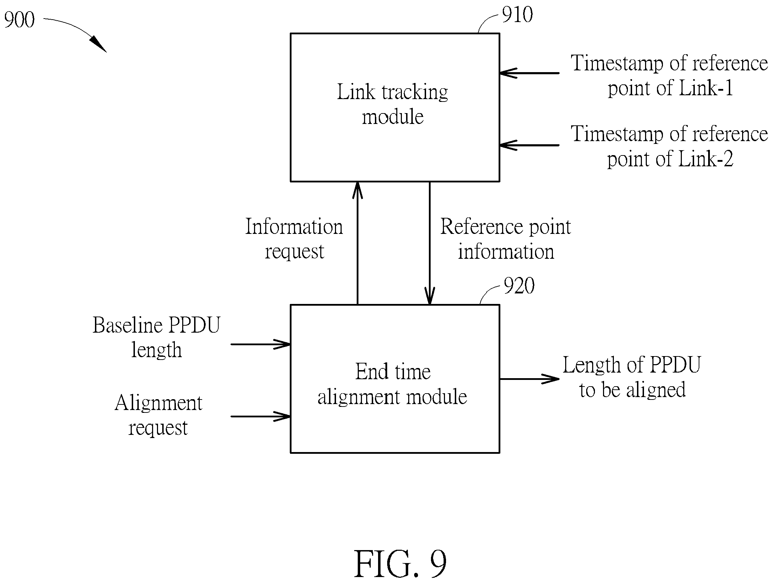

FIG. 9 is a diagram illustrating a MAC layer circuitry 900 within the wireless communication module 114 according to a first embodiment of the present invention, wherein the MAC layer circuitry 900 can be configured to perform the steps shown in FIG. 2 and FIG. 5. As shown in FIG. 9, the MAC layer circuitry 900 comprises a link tracking module 910 and an end time alignment module 920. The link tracking module 910 is configured to continuously store the timestamps of the reference points of Link-1 and Link-2, such as the timestamps 'r1' and 'r2' shown in FIG. 3. The end time alignment module 920 is configured to receives the alignment request (i.e., alignment calculation shown in FIG. 3), and send an information request to the link tracking module 910 to obtain the reference point information (i.e., timestamps of the reference points of Link-1 and Link-2) . Then, the end time alignment module 920 receives the length time of the baseline PPDU, and calculates the length of the PPDU to be aligned according to the formula (1) or formula (2) mentioned above.

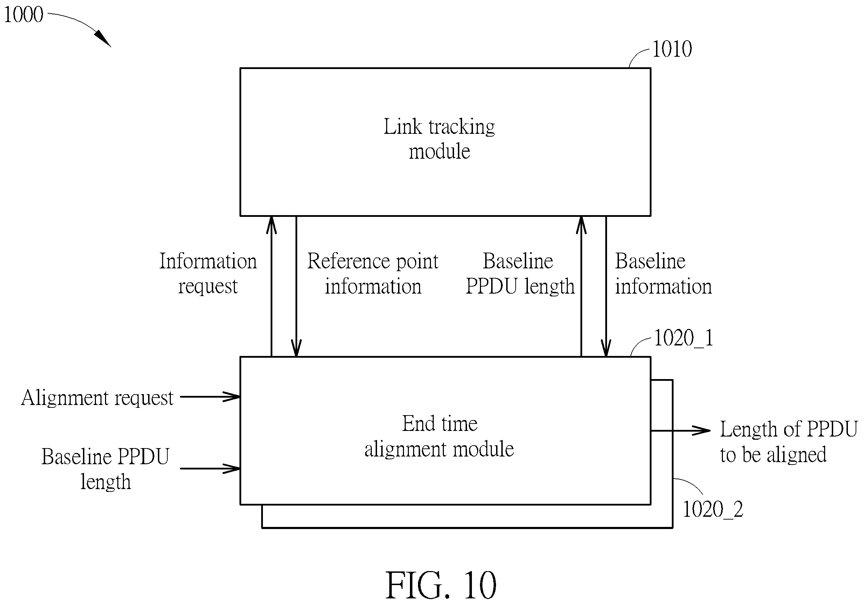

FIG. 10 is a diagram illustrating a MAC layer circuitry 1000 within the wireless communication module 114 according to a second embodiment of the present invention, wherein the MAC layer circuitry 1000 can be configured to perform the steps shown in FIG. 2 and FIG. 5. As shown in FIG. 10, the MAC layer circuitry 1000 comprises a link tracking module 1010 and at least two end time alignment modules 1020_1 and 1020_2, wherein the end time alignment module 1020_1 is for the Link-1, and the end time alignment modules 1020_2 is for the Link-2. The link tracking module 1010 is configured to continuously store the timestamps of the reference points of Link-1 and Link-2, such as the timestamps 'r1' and 'r2' shown in FIG. 3, and further configured to store the PPDU length provided by the end time alignment modules 1020_1 and 1020_2. For example, the link tracking module 1010 receives the length of the first PPDU from the time alignment module 1020_1 if the first PPDU transmitted via the Link-1 serves as the baseline PPDU; and the link tracking module 1010 receives the length of the second PPDU from the time alignment module 1020_2 if the second PPDU transmitted via the Link-2 serves as the baseline PPDU. The end time alignment module 1020_1 is configured to receives the alignment request (i.e., alignment calculation shown in FIG. 3), and send an information request to the link tracking module 1010 to obtain the reference point information (i.e., timestamps of the reference points of Link-1 and Link-2) and the baseline PPDU information (i.e., length of the second PPDU) . Then, the end time alignment module 1020_1 calculates the length of the PPDU to be aligned according to the formula (1) or formula (2) mentioned above. Similarly, the end time alignment module 1020_2 is configured to receives the alignment request, and send an information request to the link tracking module 1010 to obtain the reference point information (i.e., timestamps of the reference points of Link-1 and Link-2) and the baseline PPDU information (i.e., length of the first PPDU). Then, the end time alignment module 1020_2 calculates the length of the PPDU to be aligned according to the formula (1) or formula (2) mentioned above.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A control method of a wireless communication module having a first link and a second link, comprising:

    obtaining a first timestamp of a first reference point (202) corresponding to a first physical layer protocol data unit, in the following also referred to as PPDU, wherein the first PPDU is transmitted on a channel corresponding to the first link;

    obtaining a second timestamp of a second reference point (206) corresponding to the second link, wherein the second reference point is a slot boundary, a transmission end or a reception end;

    determining a length of a second PPDU (210) according to the first timestamp and the second timestamp, to make an end of the second PPDU is aligned to an end of the first PPDU; and

    generating the second PPDU according to the determined length of the second PPDU, and transmitting the second PPDU after the second reference point (212).

2. The control method of claim 1, wherein the first reference point is a slot boundary, a transmission end or a reception end before a transmission of the first PPDU.

3. The control method of claim 1 or 2, wherein the step of determining the length of the second PPDU according to the first timestamp and the second timestamp comprises:

determining the length of the second PPDU according to the first timestamp, the second timestamp, a first idle time, a second idle time and a length of the first PPDU, wherein the first idle time is a short inter-frame space, in the following also referred to as SIFS, or a slot time between the first reference point and the first PPDU, and the second idle time is the SIFS or the slot time between the second reference point and the second PPDU.

4. The control method of any one of claims 1 to 3, wherein the first reference point corresponding to the first link is a start of an alignment calculation for determining the length of the second PPDU, and the start of the alignment calculation is after the second reference point corresponding to the second link.

5. The control method of any one of claims 1 to 4, further comprising:

   obtaining a remaining length of the first PPDU after the first reference point; and
   the step of determining the length of the second PPDU according to the first timestamp and the second timestamp comprises:
   determining the length of the second PPDU according to the first timestamp, the second timestamp, an idle time and the remaining length of the first PPDU, wherein the idle time is a SIFS or a slot time between the second reference point and the second PPDU.

6. The control method of any one of claims 1 to 5, wherein the first PPDU is transmitted by another device different from a device having the wireless communication module.

7. The control method of any one of claims 1 to 6, further comprising:

   determining a packet length of the first PPDU and the first timestamp of the first reference point according to a header of the first PPDU; and
   the step of determining the length of the second PPDU according to the first timestamp and the second timestamp comprises:
   determining the length of the second PPDU according to the first timestamp, the second timestamp, an idle time and the packet length of the first PPDU, wherein the idle time is a SIFS or a slot time between the second reference point and the second PPDU.

8. A wireless communication module (114) of an electronic device, configured to perform the steps of:

   obtaining a first timestamp of a first reference point corresponding to a first physical layer protocol data unit, in the following also referred to as PPDU, wherein the first PPDU is transmitted on a channel corresponding to the first link;
   obtaining a second timestamp of a second reference point corresponding to the second link, wherein the second reference point is a slot boundary, a transmission end or a reception end;
   determining a length of a second PPDU according to the first timestamp and the second timestamp, to make an end of the second PPDU is aligned to an end of the first PPDU; and
   generating the second PPDU according to the determined length of the second PPDU, and transmitting the second PPDU after the second reference point.

9. The wireless communication module (114) of claim 8, wherein the first reference point is a slot boundary, a transmission end or a reception end before a transmission of the first PPDU.

10. The wireless communication module (114) of claim 8 or 9, wherein the step of determining the length of the second PPDU according to the first timestamp and the second timestamp comprises:
    determining the length of the second PPDU according to the first timestamp, the second timestamp, a first idle time, a second idle time and a length of the first PPDU, wherein the first idle time is a short inter-frame space, in the following also referred to as SIFS, or a slot time between the first reference point and the first PPDU, and the second idle time is the SIFS or the slot time between the second reference point and the second PPDU.

11. The wireless communication module (114) of any one of claims 8 to 10, wherein the first reference point corresponding to the first link is a start of an alignment calculation for determining the length of the second PPDU, and the start of the alignment calculation is after the second reference point corresponding to the second link.

12. The wireless communication module (114) of any one of claims 8 to 11, further configured to perform the steps of:

obtaining a remaining length of the first PPDU after the first reference point; and

the step of determining the length of the second PPDU according to the first timestamp and the second timestamp comprises:

determining the length of the second PPDU according to the first timestamp, the second timestamp, an idle time and the remaining length of the first PPDU, wherein the idle time is a SIFS or a slot time between the second reference point and the second PPDU.

13. The wireless communication module of any one of claims 8 to 12, wherein the first PPDU is transmitted by another device different from a device having the wireless communication module.

14. The wireless communication module of any one of claims 8 to 13, further configured to perform the steps of:

determining a packet length of the first PPDU and the first timestamp of the first reference point according to a header of the first PPDU; and

the step of determining the length of the second PPDU according to the first timestamp and the second timestamp comprises:

determining the length of the second PPDU according to the first timestamp, the second timestamp, an idle time and the packet length of the first PPDU, wherein the idle time is a SIFS or a slot time between the second reference point and the second PPDU.

FIG. 1

EP 4 369 806 A1

200

Start

202

Obtain timestamp of first reference point 'r1'
of Link-1 and corresponding idle time 'i1'

204

Transmit first PPDU via Link-1

206

Obtain timestamp of second reference point 'r2'
of Link-2 and corresponding idle time 'i2'

208

Start alignment calculation and obtain
the first PPDU length 't1

210

Calculate the length of the second PPDU of
Link-2 according to r1, i1, r2, i2 and t1

212

Generate and transmit
second PPDU via Link-2

FIG. 2

Link-1 ... First PPDU (baseline PPDU) ... Time

$t1$

r1

i1

$tdiff = (r2+i2) - (r1+i1)$

$t2$

Link-2 ... Second PPDU ... Time

r2

i2

$t2 = t1 - tdiff = t1 - [(r2+i2)-(r1+i1)]$

Alignment
calculation

FIG. 3

Alignment calculation of Link-1

Link-1

First PPDU (baseline PPDU)

t1

r1 i1

Time

Alignment calculation of Link-2

Link-2

Second PPDU

t2

r2 i2

$t2 = t1 - tdiff = t1 - [(r2+i2)-(r1+i1)]$

Time

FIG. 4

```
                              ┌─ 500
                         ( Start )

                              │
                              ▼
┌──────────────────────────────────────────────────┐ ─ 502
│           Transmit first PPDU via Link-1           │
└──────────────────────────────────────────────────┘
                              │
                              ▼
┌──────────────────────────────────────────────────┐ ─ 504
│   Obtain timestamp of reference point 'r2' of      │
│   Link-2 and corresponding idle time 'i2'          │
└──────────────────────────────────────────────────┘
                              │
                              ▼
┌──────────────────────────────────────────────────┐ ─ 506
│          Start alignment calculation and           │
│      obtain the timestamp 'rc' and remaining       │
│        length of first PPDU length 'tr'            │
└──────────────────────────────────────────────────┘
                              │
                              ▼
┌──────────────────────────────────────────────────┐ ─ 508
│   Calculate the length of the second PPDU of       │
│   Link-2 according to r2, i2, tr and rc            │
└──────────────────────────────────────────────────┘
                              │
                              ▼
┌──────────────────────────────────────────────────┐ ─ 510
│            Generate and transmit                   │
│          second PPDU via Link-2                    │
└──────────────────────────────────────────────────┘
```

FIG. 5

FIG. 6

EP 4 369 806 A1

FIG. 7

EP 4 369 806 A1

t1

rs

ts

| PPDU of another device | Header | First PPDU (baseline PPDU) | Time |

tdiff = (r2+i2) - rs

t2

| Link-2 | r2 | i2 | Second PPDU | Time |

t2 = ts - tdiff = ts- [(r2+i2)-rs]

Alignment
calculation

FIG. 8

FIG. 9

EP 4 369 806 A1

1000

1010

Link tracking
module

Information
request

Reference point
information

Baseline
PPDU length

Baseline
information

1020_1

Alignment request

End time
alignment module

Length of PPDU
to be aligned

Baseline PPDU
length

1020_2

FIG. 10

Europäisches
Patentamt

European
Patent Office

Office européen
des brevets

## EUROPEAN SEARCH REPORT

**Application Number**

**EP 23 20 1632**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/219855 A1 (SONY GROUP CORP) 20 October 2022 (2022-10-20) * abstract * & EP 4 325 963 A1 (SONY GROUP CORP [JP]) 21 February 2024 (2024-02-21) * paragraph [0090] - paragraph [0101] * * figures 1,5 * | 1-14 | INV. H04W56/00 |
| A | WO 2022/186672 A1 (LG ELECTRONICS INC [KR]) 9 September 2022 (2022-09-09) * paragraph [0008] - paragraph [0009] * * paragraph [0188] - paragraph [0189] * | 1-14 | |

**TECHNICAL FIELDS SEARCHED (IPC)**

H04W

The present search report has been drawn up for all claims

| Place of search | Date of completion of the search | Examiner |
|---|---|---|
| The Hague | 29 February 2024 | Larcinese, Annamaria |

EPO FORM 1503 03.82 (P04C01)

**ANNEX TO THE EUROPEAN SEARCH REPORT
ON EUROPEAN PATENT APPLICATION NO.**

EP 23 20 1632

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2024

| Patent document cited in search report | | Publication date | Patent family member(s) | | Publication date |
|---|---|---|---|---|---|
| WO 2022219855 | A1 | 20-10-2022 | CN | 117158078 A | 01-12-2023 |
| | | | EP | 4325963 A1 | 21-02-2024 |
| | | | JP | WO2022219855 A1 | 20-10-2022 |
| | | | TW | 202243510 A | 01-11-2022 |
| | | | WO | 2022219855 A1 | 20-10-2022 |
| WO 2022186672 | A1 | 09-09-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63383112 A